# DEMANDE DE BREVET EUROPEEN

(11) **EP 1 803 856 A1**
(43) Date de publication de la demande: **04.07.2007**
(21) Numéro de dépôt: 06301304.9
(22) Date de dépôt: 29.12.2006
(51) Int. Cl.: E03B 3/03

(54) **Dispositif de récuperation d'eau de pluie**

(30) Priorité: 30.12.2005 FR 0554156
(71) Demandeur: V2RB, 51100 Reims (FR)
(72) Inventeur: Gouzien, Loïc, 51500 Taissy (FR); Rohdmann, Willy, 51400 Les Petites Loges (FR)
(74) Mandataire: Rhein, Alain

(57) **Abrégé**

L'invention concerne un dispositif (1) de récupération d'eau de pluie s'écoulant au travers de moyens de canalisation (2), notamment une gouttière, ledit dispositif (1) comprenant, d'une part, en aval des moyens de canalisation (2), des moyens (4) de collecte de l'eau vers des moyens de stockage (5) pourvu de moyens (6) de distribution par pompage de l'eau stockée et, d'autre part, des moyens de régulation de l'eau stockée, caractérisé par le fait que lesdits moyens de collecte (4) comprenant des moyens de séparation imperméables à l'eau jusqu'à humidification de manière à évacuer temporairement l'eau puis à rediriger l'eau vers les moyens de stockage (5).

## Description

La présente invention entre dans le domaine de la récupération de l'eau, en particulier dans le recyclage des eaux pluviales.

L'invention concerne plus particulièrement un dispositif de récupération d'eau de pluie s'écoulant au travers de moyens de canalisation, notamment une gouttière.

L'eau est une ressource primordiale utilisée chaque jour pour l'alimentation et l'hygiène corporelle, ainsi que dans des tâches domestiques comme la lessive, le nettoyage, l'arrosage du jardin ou l'évacuation dans les sanitaires. Si de l'eau potable et propre est obligatoire pour préparer à manger, boire et se laver, il n'en est pas de même pour ces activités domestiques qui représentent plus de la moitié de la consommation journalière en eau d'une personne ou d'un foyer.

En contrepartie, des dispositifs souvent lourds et coûteux sont mis en oeuvre pour évacuer et drainer les eaux de pluie de chaque propriété.

De ce constat, il a été imaginé de récolter l'eau de pluie pour compenser la consommation d'eau pour les activités qui ne nécessitent pas une eau propre. En particulier, la présente invention permet de récupérer l'eau qui ruisselle sur les toitures au lieu de la laisser couler dans les systèmes d'évacuation des eaux usées.

Outre l'économie conséquente réalisée en eau potable, distribuée par les réseaux domestiques, l'eau de pluie étant plus douce, des économies sont aussi réalisées sur les produits lessiviels, le traitement anti-calcaire, la production de chaleur, etc.

De tels dispositifs de récupération d'eau de pluie sont déjà connus au travers du document DE 44 14 207 dans lequel une cuve est destinée à stocker l'eau de ruissellement collectée depuis le toit. Une pompe permet d'envoyer l'eau stockée vers la chasse d'eau de toilettes. Un tel dispositif prévoit de déclencher régulièrement l'écoulement de ladite chasse d'eau pour éviter la stagnation des eaux collectées mais non filtrées ainsi que le bouchage des conduites à cause d'éventuel dépôt de matière en suspension dans cette eau collectée, dite « grise ».

Ce dispositif n'apporte pas entière satisfaction en raison de la qualité médiocre de l'eau qu'il collecte, sans aucun moyen de filtration, limitant grandement les possibilités d'utilisation.

C'est pourquoi, il a été imaginé, au travers du document DE 199 50 729 un dispositif de stockage d'eau de ruissellement dans lequel une enceinte, préférentiellement enterrée, comprend une entrée d'arrivée de l'eau de ruissellement qui est expulsée à l'extérieur d'un bac réalisé à l'intérieur de ladite enceinte. Les particules formant un dépôt autour dudit bac sans gêner l'arrivée d'eau ou son pompage. En effet, une pompe permet de filtrer l'eau et de l'envoyer vers un réseau desservant un réseau à usage non sanitaire (toilettes, arrosage du jardin ou autre).

Toutefois, ce dispositif présente l'inconvénient de récupérer les déchets sous forme d'un dépôt à l'intérieur de la cuve. Il est alors nécessaire de l'entretenir régulièrement, entraînant un coût non négligeable.

Le dispositif selon l'invention tente de pallier les inconvénients de l'état de la technique en proposant des moyens innovants aptes à filtrer l'eau collectée avant son stockage dans la citerne, évitant l'accumulation de dépôt à l'intérieur de cette dernière.

Par conséquent, il permet d'évacuer directement les premières eaux de ruissellements plus sales, allongeant par conséquent la période de nettoyage du dispositif.

De plus, le dispositif est compatible avec une installation déjà existante et s'adapte en fonction de la pluviométrie du lieu d'installation.

L'invention trouvera donc son application au sein d'une maison ou immeuble de particulier, auprès des entreprises, tout comme en agriculture ou même dans les stations de lavage ; dans tout lieu où l'eau utilisée n'a pas besoin d'être potable.

Pour ce faire, la présente invention concerne un dispositif de récupération d'eau de pluie s'écoulant au travers de moyens de canalisation, notamment une gouttière, ledit dispositif comprenant, d'une part, en aval des moyens de canalisation, des moyens de collecte de l'eau vers des moyens de stockage pourvu de moyens de distribution par pompage de l'eau stockée et, d'autre part, des moyens de régulation de l'eau stockée.

Un tel dispositif se caractérise par le fait que lesdits moyens de collecte comprennent des moyens de séparation imperméables à l'eau jusqu'à humidification de manière à évacuer temporairement l'eau puis à rediriger l'eau vers les moyens de stockage.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue schématisée d'un dispositif selon l'invention ;
- la figure 2 est une vue d'un détail du dispositif de récupération d'eau de pluie ; et
- la figure 3 est une vue d'un autre détail du dispositif selon l'invention.

La présente invention concerne un dispositif 1 de récupération d'eau de pluie. Un tel dispositif 1 est destiné à récupérer l'eau de pluie ruisselant sur une toiture, un élément de couverture, une terrasse ou analogue et s'écoulant au travers de moyens de canalisation 2. Ces derniers peuvent être une gouttière ou un tuyau normalement reliés à un réseau d'évacuation 3, par exemple de type urbain, un puisard ou autre.

Pour ce faire, le dispositif 1 selon l'invention est installé en dérivation des moyens de canalisation 2, en amont du réseau d'évacuation 3. En particulier, des moyens de collecte 4 sont disposés en aval desdits moyens de canalisation 2 et envoie l'eau vers des moyens de stockage 5. Ces derniers peuvent se présenter préférentiellement sous la forme d'un conteneur, d'une cuve ou d'une citerne. Ils peuvent être hermétiquement clos pour protéger l'eau collectée ainsi stockée des salissures extérieures.

De plus, les moyens de stockage 5 sont placés dans un endroit approprié mais peuvent aussi être enterrés en tout ou partie, les moyens de collecte 4 étant alors au moins en partie accessibles. De plus, un regard 12 pour l'entretien et le nettoyage du dispositif 1 peut être envisagé.

Les moyens de stockage 5 sont pourvus de moyens 6 de distribution par pompage de l'eau stockée afin d'envoyer l'eau vers le réseau domestique destiné à l'usage ménagé, les sanitaires, etc.

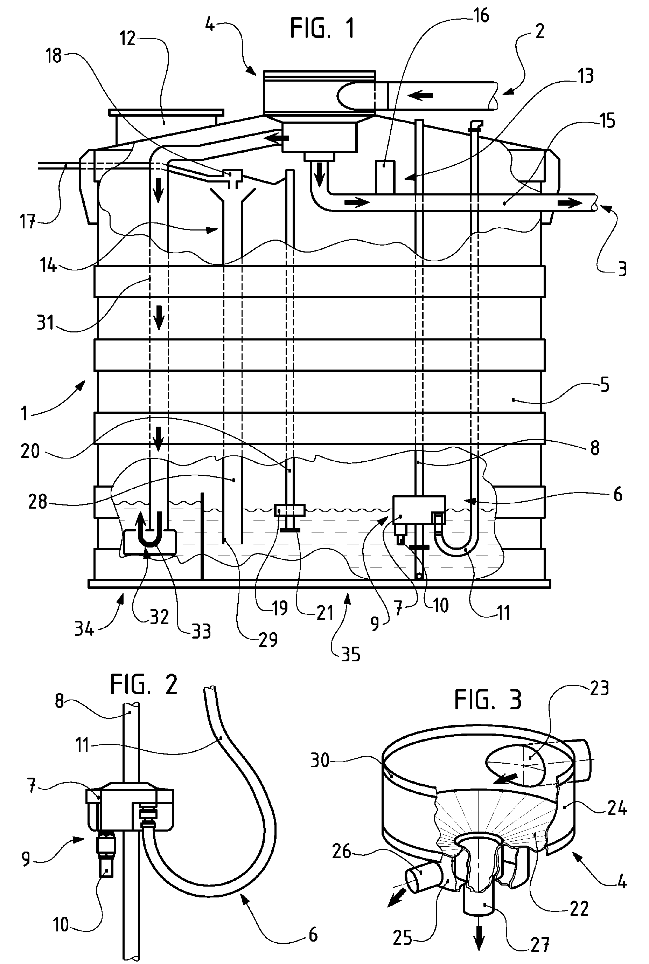

Ces moyens de distribution 6, particulièrement visibles sur la figure 2, se présentent sous la forme de moyens d'aspiration solidaires d'un flotteur 7 monté libre en coulissement sur une tige 8 verticale fixe par rapport auxdits moyens de stockage 5. Les moyens d'aspiration 9 comprennent au moins une entrée 10 située sous ledit flotteur 7 et par conséquent immergée en permanence sous la surface de l'eau stockée. Les moyens d'aspiration 9 comprennent avantageusement une crépine pourvue d'un clapet anti-retour. Les moyens d'aspiration 9 sont connectés à un tuyau 11, flexible ou semi-rigide, acheminant l'eau par aspiration, sous l'action d'une pompe non représentée, vers le réseau domestique susmentionné. La tige 9 évite les remouds lors de l'aspiration en maintenant fixe le flotteur 8, et par conséquent l'entrée 10 d'aspiration, dans un plan horizontal.

Le dispositif 1 selon l'invention comprend aussi des moyens de régulation de l'eau stockée. En effet, en fonction des précipitations, irrégulières en fonction des saisons, et selon les besoins en eau, les moyens de stockage peuvent se retrouver plein ou vide. Selon le cas, il est alors nécessaire réciproquement d'évacuer le surplus d'eau collectée ou de compenser une pénurie d'eau stockée.

Pour ce faire, les moyens de régulation comprennent, d'une part, des moyens 13 d'évacuation du surplus d'eau et, d'autre part, des moyens 14 de compensation du manque d'eau.

D'une part, les moyens d'évacuation 13 se présente sous la forme d'un trop-plein, disposé en partie haute desdits moyens de stockage 5. Ils comprennent un conduit d'évacuation 15 pourvu d'un regard 16 déterminant le niveau maximum de remplissage de la cuve. L'eau qui dépasse ce niveau s'écoule alors par le conduit 15 vers le réseau d'évacuation 3.

D'autre part, les moyens de compensation 14 du manque d'eau comprennent une arrivée d'eau 17 connectée à un réseau domestique, comme un réseau d'approvisionnement en eau potable. L'ouverture et la fermeture de l'arrivée d'eau 17 est commandée au travers d'une vanne 18 de manière à maintenir un niveau d'eau minimum au sein des moyens de stockage. Pour ce faire, ladite vanne 18 est actionnée au travers d'un flotteur 19 se maintenant en surface de l'eau stockée, la vanne 18 et le flotteur 19 étant solidaires des extrémités d'une tige verticale 20. Lors de l'abaissement du niveau d'eau sous un niveau minimum, la vanne 18 est ouverte afin d'augmenter le niveau d'eau stockée. Ainsi, une réserve d'eau est assurée au sein des moyens de stockage 5.

De plus, le flotteur 19 peut être prévu coulissant le long de la tige 20, cette dernière comprenant une butée 21 à son extrémité basse pour arrêter ledit flotteur 19. Ainsi, le flotteur 19 peut glisser le long de la tige 20 lorsque le niveau d'eau varie dans les moyens de stockage 5.

Préférentiellement, un tuyau 28 est disposé sous la vanne 18 de l'arrivée d'eau 17. Ce tuyau 28 comprend une extrémité 29 en partie basse continuellement immergée sous le niveau d'eau stockée, limitant ainsi les remouds lors du remplissage et en accord avec les normes en vigueur.

Avantageusement, comme visible sur la figure 3, le dispositif 1 comprend des moyens de collecte 4 pourvu de moyens de séparation temporaire 22, par évacuation, de l'eau collectée. En effet, lors d'une pluie, les premières eaux nettoient le toit et emportent la poussière, la pollution et la saleté qui s'y dépose. En particulier, des feuilles et autres résidus peuvent être entraînés par les eaux ruisselantes. Pour éviter que ces déchets n'encrassent les moyens de stockage 5 et de collecte 4, il a été imaginé de séparer au début des pluies, l'eau sale de l'eau plus propre. Cette séparation permet d'augmenter les périodes de nettoyage des moyens de collecte 4 ou des moyens de stockage 5.

Ainsi, les moyens de séparation 22 sont prévus imperméables à l'eau pendant un certain temps, jusqu'à humidification. Après qu'ils soient imbibés totalement ou partiellement, les moyens de séparation 22 laisse s'écouler l'eau. De plus, ces moyens de séparations 22 peuvent jouer le rôle de filtre, retenant certaines particules.

Pour ce faire, les moyens de collecte 4 comprennent, d'une part, une entrée d'eau 23 reliée auxdits moyens de canalisation 2 et située en partie supérieure 24, d'autre part, située en partie inférieure 25 une sortie d'eau 26 reliée auxdits moyens de stockage 5, et d'autre part encore, une sortie d'évacuation 27 centrale de sorte que les moyens de séparation 22, disposés entre l'entrée 23 et la sortie 26 vers les moyens de stockage 5, évacuent temporairement l'eau vers la sortie d'évacuation 27 avant d'orienter l'eau vers la sortie 26 reliée aux moyens de stockage 5. Les moyens de séparation 22 séparent donc les moyens de collecte 4 en deux parties haute 24 et basse 25, la partie supérieure 24 étant directement reliée par la sortie 27 au réseau d'évacuation 3. A ce propos, la sortie 27 peut être reliée au conduit 15 pour l'évacuation du trop-plein.

Ainsi, indépendamment de l'intensité de l'averse, les résidus jusqu'aux plus fins comme les poussières et les pollutions sont évacuées par formation de colloïdes au niveau des moyens de séparation 22, lesdits colloïdes s'évacuant au travers de la sortie 27.

Les moyens de collectes 4 peuvent se présenter sous la forme d'un carter 30, comprenant un couvercle non représenté, amovible pour un accès aisé en vue du nettoyage. De plus, le carter 30 peut être réalisés en une seule pièce, de préférence par moulage ou analogue, en matière composite ou plastique.

L'eau collectée par les moyens de collecte 4 est ensuite envoyée vers les moyens de stockage 5 au travers d'un tuyau 31. Ce tuyau débouche par une sortie 32 dite « tranquille » sous la surface de l'eau, afin d'éviter les remouds et formant un siphon 33, empêchant la circulation de l'air.

Avantageusement, les moyens de stockage 5 peuvent être divisés en deux parties, l'une contenant un bac de stockage 34 recevant l'eau collecté, une autre contenant un bac de stockage 35 pour l'eau de ville. En d'autre terme, chaque sortie 29,32 débouche dans un bac 34,35 différent : la sortie tranquille 32 est immergée dans le bac 34 tandis que la sortie 29 est immergée dans le bac 35. De plus, les bacs 34,35 peuvent n'être séparés qu'au travers d'une paroi 36 s'étendant sur une partie de la hauteur de la cuve constituant les moyens de stockage 5. Ainsi, l'eau peut s'écouler depuis le bac 34 vers le bac 35 par débordement au-dessus de ladite paroi 36. L'eau collectée, bien qu'étant filtrée, garde des impuretés qui se déposent au fond dudit bac 34. C'est pourquoi la séparation des bacs 34 et 35 permet de limiter la propagation desdites impuretés. De plus, la séparation desdits bacs 34 et 35, en rajout des autres caractéristiques de l'invention, permet d'espacer l'entretien de la cuve des moyens de stockage 5 de façon conséquente dans le temps, ainsi que de limiter le nettoyage ou la cure au bacs 34 recevant l'eau collectée.

Le dispositif 1 de récupération d'eau selon l'invention permet donc le recyclage de l'eau de pluie en régulant et assurant un stockage de l'eau ainsi collectée.

## Revendications

1. Dispositif (1) de récupération d'eau de pluie s'écoulant au travers de moyens de canalisation (2), notamment une gouttière, ledit dispositif (1) comprenant, d'une part, en aval des moyens de canalisation (2), des moyens (4) de collecte de l'eau vers des moyens de stockage (5) pourvu de moyens (6) de distribution par pompage de l'eau stockée et, d'autre part, des moyens de régulation de l'eau stockée, **caractérisé par le fait que** lesdits moyens de collecte (4) comprenant des moyens de séparation (22) imperméables à l'eau jusqu'à humidification de manière à évacuer temporairement l'eau puis à rediriger l'eau vers les moyens de stockage (5).

2. Dispositif (1) selon la revendication 1, **caractérisé par le fait que** les moyens de régulation comprennent une arrivée d'eau (17) connectée à un réseau domestique et dont le débit est commandé automatiquement au travers d'une vanne (18) de manière à maintenir un niveau d'eau minimum au sein des moyens de stockage (5).

3. Dispositif (1) selon la revendication 2, **caractérisé par le fait que** ladite vanne (18) est actionnée au travers d'un flotteur (19) se maintenant en surface de l'eau stockée.

4. Dispositif (1) selon l'une quelconque des revendications précédentes, **caractérisé par le fait que** les moyens de distribution (6) par pompage se présentent sous la forme de moyens d'aspiration (9) solidaires d'un flotteur (7) monté libre en coulissement sur une tige (8) verticale fixe par rapport auxdits moyens de stockage (5).

5. Dispositif (1) selon la revendication 4, **caractérisé par le fait que** les moyens d'aspiration (9) comprennent une crépine pourvue d'un clapet anti-retour.

6. Dispositif (1) selon l'une quelconque des revendications précédentes, **caractérisé par le fait que** les moyens de collecte (4) comprennent, d'une part, une entrée d'eau (23) reliée auxdits moyens de canalisation (2) et située en partie supérieure (24), d'autre part, située en partie inférieure (25) une sortie d'eau (26) reliée auxdits moyens de stockage (5), et d'autre part encore, une sortie d'évacuation centrale (27) de sorte que les moyens de séparation (22), disposés entre l'entrée (23) et la sortie (26) vers les moyens de stockage (5), évacuent temporairement l'eau vers la sortie d'évacuation (27) avant d'orienter l'eau vers la sortie (26) reliée aux moyens de stockage (5).
